# FASCICULE DE BREVET EUROPEEN

(11) **EP 1 560 882 B1**
(45) Date de publication et mention de la délivrance du brevet: **29.03.2006**
(21) Numéro de dépôt: 03782543.7
(22) Date de dépôt: 12.11.2003
(51) Int. Cl.: C08L 91/06, C11B 5/00

(54) **COMPOSITIONS DE PARAFFINES ET LEUR UTILISATION POUR LA FABRICATION DE BOUGIES.**
PARAFFINZUSAMMENSETZUNGEN UND IHRE ANWENDUNG IN DER HERSTELLUNG VON KERZEN
PARAFFIN COMPOSITIONS AND THEIR USE FOR MAKING CANDLES

(30) Priorité: 14.11.2002 FR 0214238
(43) Date de publication de la demande: 10.08.2005
(73) Titulaire: TotalFinaElf France, 92800 Puteaux (FR)
(72) Inventeur: ANDRE, Didier, F-76290 Montivilliers (FR); CONTREMOULINS, Sylvette, F-76290 Montivilliers (FR); JOLIVET, Yannick, F-76600 Le Havre (FR)
(74) Mandataire: Pöpping, Barbara
(86) Numéro de dépôt international: PCT/FR2003/003350
(87) Numéro de publication internationale: WO 2004/046250

(56) Documents cités:
- WO-A-00/60012
- WO-A-02/086040
- US-A- 3 046 101
- US-A- 3 857 805
- DATABASE WPI Section Ch, Week 199838 Derwent Publications Ltd., London, GB; Class A17, AN 1998-440141 XP002248267 & HU 213 382 A (MOL MAGYAR OLAJ ES GAZIPARI RT) 30 mars 1998 (1998-03-30)
- DATABASE WPI Section Ch, Week 200022 Derwent Publications Ltd., London, GB; Class A60, AN 2000-251690 XP002248268 -& JP 2000 063676 A (NIPPON SEIRO KK) 29 février 2000 (2000-02-29)
- DATABASE WPI Section Ch, Week 199625 Derwent Publications Ltd., London, GB; Class A97, AN 1996-249917 XP002248269 & RU 2 046 131 C (PERMNEFTEORGSINTEZ ENTERP) 20 octobre 1995 (1995-10-20)

## Description

La présente invention concerne des compositions de paraffines réalisées à partir de paraffines dites « molles », encore appelées « bases molles », destinées principalement à la fabrication de bougies, notamment pour des usages en extérieur, et tout spécialement pour des bougies de type verrine ou pour autres contenants. Elle a plus particulièrement pour objet une telle utilisation de ces compositions.

On sait que les procédés usuels de fabrication d'huiles lubrifiantes d'origine pétrolière comprennent une suite d'opérations de raffinage complexes, à l'issue desquelles on obtient un mélange d'huiles et de plusieurs types de paraffines. Généralement, ce mélange est ensuite soumis à un refroidissement en présence d'un solvant, en vue de provoquer la cristallisation des paraffines et de conduire ainsi, après un processus de séparation par filtration à plusieurs niveaux :
- à une première phase appelée "slack wax" ou « gatsch » dans la technique, constituée de paraffines, d'huiles et de solvants de déparaffïnage,
- et à une seconde phase liquide, destinée à la commercialisation des huiles minérales lubrifiantes.

Un nouveau traitement de séparation par filtration, appelé déshuilage ou fractionnement, appliqué sur la première phase ainsi récupérée, permet d'obtenir une fraction solide constituée de cires et de paraffines dites « dures », ainsi qu'un produit intermédiaire entre l'huile et la paraffine, appelé « base molle ».

Les paraffines dures ainsi obtenues sont composées essentiellement de normales paraffines, avec une très faible proportion d'isoparaffines, et de cycloparaffines, présentant généralement une teneur en huile inférieure ou égale à 0,5% en poids, et une pénétrabilité à l'aiguille inférieure ou égale à 20 dixième de millimètre à 25°C, mesurées respectivement conformément aux normes NF T 60-120 et NF T 60-123 de Décembre 1972.

Les bases molles, une fois séparées des solvants de déparaffinage, contiennent de grandes quantités d'isoparaffines fortement ramifiées, généralement égales ou supérieures à 50 % en poids, conduisant à une teneur en huile résiduelle importante, pouvant aller jusqu'à plusieurs dizaines de pourcents en poids. Les valeurs pour les pénétrabilités à l'aiguille, mesurées conformément à la norme ci-dessus citée, sont dans ce cas largement supérieures à 50 dixième de millimètre.

Les paraffines dures ont de nombreuses applications dans l'industrie et on les utilise en particulier pour la fabrication de bougies, pour l'enduction de différents emballages, comme cires anti-ozone, notamment dans les pneumatiques, ou encore dans les adhésifs à chaud connus sous l'appellation "hotmelts", etc. De plus, ces paraffines peuvent être, si elles sont totalement désaromatisées, utilisées dans l'industrie alimentaire et, en particulier, dans l'emballage des aliments.

En revanche, les bases molles, à cause notamment de leur structure moléculaire particulière, de leur teneur importante en huile pouvant générer une couleur légèrement jaunâtre, de leur bas point de fusion, ainsi qu'également de leur dureté insuffisante, ne sont pas utilisées sur le marché courant réservé aujourd'hui aux paraffines dures, et notamment à la fabrication de bougies éclairantes. Elles sont par conséquent employées pour d'autres fins, en particulier, par exemple, comme charge dans une unité de craquage, dans laquelle leurs molécules sont cassées pour conduire à des composés plus légers nécessaires à la fabrication d'autres produits hydrocarbonés, telles les essences pour moteurs à explosion.

WO 00/60012 A divulgue des compositions de cire contenant de 1 à 45 % en poids d'huile et de 0,1 à 10 % d'un polymère élastomère, et notamment d'un élastomère thermoplastique choisi parmi les copolymères blocs styrène/diène conjugué, en tant qu'agent de rétention d'huile destiné à réduire ou à empêcher le suintement de l'huile à partir de la composition. L'utilisation de ces compositions pour la fabrication de bougies est envisagée.

Le document décrit toutefois uniquement la fabrication de bougies libres "auto-porteuses", c'est-à-dire de bougies n'ayant pas besoin d'un contenant en verre (verrine).

US 3 857 805 A décrit l'incorporation, dans des compositions de cire à forte teneur en huile, d'au moins un terpolymère éthylène/propylène/polyène non-conjugué dans le but de prévenir la séparation de phases ("stratification") et l'exsudation de l'huile à partir des compositions. Les applications envisagées pour ce type de composition de cire englobent la fabrication de bougies (colonne 1, ligne 15).

Les terpolymères EPDM utilisés sont des terpolymères statistiques, ne comportant pas de "blocs" homopolymères. Ce document n'envisage en outre à aucun moment l'utilisation des compositions de cire à haute teneur en huile pour la fabrication de bougies en verrine.

WO 02/086040 A divulgue des compositions de cire comprenant (a) de 5 à 25 % d'un composant hydrocarboné combustible liquide choisi parmi les esters méthyliques d'acides gras, (b) au plus 10 % d'un copolymère ester vinylique/mono-oléfine et (c) de la cire paraffinique à bas point de fusion, et l'utilisation de telles compositions pour la fabrication de bougies en verrine à temps de combustion prolongé.

Les cires paraffiniques utilisées dans ce document ne sont pas des "bases molles" au sens de la présente invention, c'est-à-dire un produit, intermédiaire entre huile et paraffine, correspondant au filtrat obtenu après déshuilage d'une cire de type "slack wax" ou "gatsch". Par ailleurs, le copolymère ester vinylique/mono-oléfine (par exemple un copolymère éthylène/acétate de vinyle), utilisé dans ce document en tant qu'additif destiné à réduire la vitesse de combustion de la composition, est un copolymère statistique et non pas un copolymère séquencé ou à blocs.

L'absence de commercialisation, et donc de valorisation économique, des bases molles issues de l'étape de déshuilage dans le procédé de déparaffinage des huiles lubrifiantes, s'explique par le fait que cette valorisation occasionnerait diverses contraintes techniques inhérentes à la nature du produit, génératrices de coûts non négligeables pour l'exploitant, et en particulier :
- la nécessité d'utiliser des opérations de raffinage complémentaires (par exemple, un hydrotraitement ou un raffinage à la bauxite), en vue de conférer à ces bases molles, des caractéristiques d'odeur et de couleur acceptables ;
- l'utilisation de moyens logistiques spécifiques pour leur stockage, afin d'éviter toute pollution avec des produits plus nobles.

Il n'y a donc pas aujourd'hui de valorisation économique importante pour les bases molles, notamment dans le domaine de la fabrication des bougies, qui utilise globalement, à elle seule, plus de 40 % de la production des paraffines dures.

Au cours de ses recherches sur la formulation de paraffines pour bougies éclairantes, la Demanderesse a mis en évidence, de façon surprenante, que l'on pouvait substituer tout ou partie de la paraffine dure par des bases molles, à condition, toutefois, d'utiliser un ou plusieurs additifs spécifiques.

En effet, parmi les procédés utilisés pour la fabrication des bougies, certains peuvent s'accommoder parfaitement d'une matière plus molle que les paraffines dures et l'odeur résiduelle des bases molles ne pose pas de problèmes particuliers lorsque les bougies sont destinées à un usage extérieur, par exemple sous forme de bougies de jardin, ou si elles sont parfumées artificiellement par les fabricants, ce qui est aujourd'hui le cas pour certaines applications particulières.

La présente invention vise en conséquence à proposer des compositions de paraffines, réalisées à partir de bases molles et contenant un ou plusieurs additifs, susceptibles d'être utilisées pour la fabrication de bougies éclairantes de type verrines ou pour d'autres contenants. Dans cette application, les bases molles qui contiennent plusieurs dizaines de pourcents de molécules de type isoparaffiniques, associées à des additifs, permettent de fabriquer des bougies présentant une couleur commercialement acceptable, avec des émissions de fumée limitées, sans avoir recours à des procédés de raffinage supplémentaires et économiquement pénalisants pour l'exploitant.

A cet effet, l'invention a pour objet l'utilisation, pour la réalisation de bougies pour verrines, d'une composition de paraffines comprenant :
- au moins 50 % en poids d'au moins d'une base molle, constituée essentiellement de molécules hydrocarbonées de type isoparaffinique, dont la teneur en huile est comprise entre 5 % et 35 % en poids, et
- au moins un additif choisi dans le groupe constitué par les copolymères élastomériques de type bloc et/ou dans le groupe constitué par les cires microcristallines, dont la teneur en poids dans la composition est comprise entre 1 % et 30 % en poids, et de préférence, entre 1 % et 20 % en poids.

Avantageusement, la composition de paraffines comprendra une teneur en au moins une base molle hydrocarbonée supérieure à 70 % en poids. Cette base molle hydrocarbonée sera elle-même constituée essentiellement de molécules de type paraffines ramifiées, principalement isoparaffiniques, dont la teneur dans la base molle, est comprise entre 50 % et 90 % en poids et, de préférence, entre 55 % et 85 % en poids. De préférence, la teneur en huile de la base molle sera comprise entre 5 % et 25 % en poids.

Différents grades de bases molles peuvent être mélangés dans la composition de paraffines, de manière à adapter la teneur en huile de la base molle entre 5% et 35 % en poids et, de préférence, entre 5 % et 25 % en poids.

L'additif choisi dans le groupe des copolymères élastomérique de type bloc est avantageusement un copolymère styrène-éthylène-butylène-styrène, dont la teneur dans la composition de paraffines est comprise entre 1 % et 20 % en poids et, de préférence, entre 1 % et 10 % en poids.

L'additif peut également être choisi dans le groupe constitué par les cires microcristallines, dont la teneur dans la composition varie entre 1 % et 30 % en poids et, de préférence, entre 5 % et 20 % en poids. Le point de fusion de cette cire microcristalline sera supérieur à 50°C et, de préférence, à 80°C.

Le copolymère et/ou la cire microcristalline tels que définis ci-dessus, en combinaison avec au moins une base molle, permettent, conformément à l'invention, de disposer d'une nouvelle composition de paraffines apte à la fabrication de bougies.

D'autres copolymères ou cires, tels que les styrènes-butadiènes-styrènes ou cires de polyéthylène, peuvent être utilisés conformément à l'invention, mais les produits ainsi fabriqués ne présentent pas les niveaux de qualité des standards habituellement utilisés dans le domaine de la bougie, notamment en ce qui concerne la vitesse de combustion et les émissions de fumées.

L'utilisation des compositions mentionnées ci-dessus comme bougies pour verrines est très avantageuse, car la teneur en huile des bases molles les rend particulièrement bien adaptées à une telle application.

En effet, avec les formulations usuelles à base de paraffines dures, les fabricants sont amenés à ajouter à celles-ci un peu d'huile ou à rechercher parmi ces paraffines dures celles qui sont les plus huileuses, de façon à obtenir, après remplissage de la verrine avec la paraffine fondue et refroidissement de celle-ci, une, bonne adhérence entre la paraffine et le contenant. De plus, leur couleur jaune gris clair ou plus généralement proche du blanc, couleur normale de la bougie réalisée avec des paraffines dures, ainsi que leurs faibles émissions de fumée, confèrent un intérêt commercial à l'utilisation comme bougies pour verrines des compositions définies ci-dessus.

La composition de paraffines utilisée peut être préparée par mélange à l'état fondu :
- d'au moins 50 parties en poids d'au moins une base molle, constituée essentiellement de molécules hydrocarbonées de type isoparaffinique, dont la teneur en huile est comprise entre 5 % et 35 % en poids, et
- de 1 à 30 parties en poids et, de préférence, de 1 à 20 parties en poids d'au moins un additif choisi dans le groupe constitué par les copolymères élastomériques de type bloc et/ou dans le groupe constitué par les cires microcristallines.

Ces compositions de paraffines sont particulièrement adaptées pour la fabrication de bougies pour tout type de contenant, que celui-ci soit en verre, métal, ou autre, par exemple en une paraffine dure.

Les avantages des compositions paraffines conformes à l'invention, dans leur utilisation pour la réalisation de bougies, ressortiront mieux des exemples qui vont suivre et qui n'ont pas de caractère limitatif.

### Exemples

A partir de trois bases molles distinctes repérées PM1, PM2 et PM3 dans le Tableau 1 ci-dessous, la Demanderesse a réalisé, en vue de fabriquer des bougies éclairantes pour verrines, un mélange (IPM123) dans les proportions suivantes : 20,0% PM1 / 43,0% PM2 / 37,0% PM3. Les caractéristiques physico-chimiques de chacune de ces bases molles et de leur mélange sont indiquées dans le Tableau 1. Les proportions adoptées pour le mélange dépendent des teneurs en huile respectives de chacune des bases molles utilisées.

**Tableau 1 : Caractéristiques physico-chimiques des bases molles.**

| Caractéristiques | Normes | PM1 | PM2 | PM3 | IPM123 |
|---|---|---|---|---|---|
| Couleur Saybolt | NFN 07-03 | 0 | 14 | -13 | - 1 |
| Couleur ASTM | NFT 60-104 | < 0,5 | < 0,5 | 0,5 | < 0,5 |
| Viscosité à 100°C (mm²/s) | ISO 3104 | 2,79 | 3,79 | 5,21 | 3,92 |
| Point de figeage (°C) | NFT60-128 | 36 | 46 | 40 | 42 |
| Pénétrabilité à l'aiguille à 25°C (1/10 mm) | NFT 60-123 | 114 | 94 | 220 | 103 |
| Teneur en huile (% en poids) | NFT 60-120 | 29,3 | 20,0 | 31,8 | 25,2 |
| Teneur en n-paraffines (% en poids) | Chromato. Gaz.* | 46,2 | 41,3 | 14,0 | 35,4 |
| Centrage | Chromato. Gaz. * | C22 | C26 | plat | C22 |

| | | | | | |
|---|---|---|---|---|---|
| * Chromatographie en phase gazeuse. | | | | | |

Quatorze compositions de paraffines ont été réalisées à partir du mélange de bases molles IPM123, auquel ont été ajoutés différents polymères ou cires de diverses origines, choisis en vue d'améliorer certaines caractéristiques des bases molles, notamment la pénétrabilité, la couleur, le brûlage et les émissions de fumée, afin de rendre au produit final un aspect commercialement acceptable.

Après nouvelle addition d'un anti-oxydant de type BHT à hauteur de 0,05% en poids dans les compositions, chacun des mélanges a été coulé dans des verrines présentant un diamètre intérieur de 12,5 cm et équipées d'une mèche armée n°3, fournie par la société Gresland.

Les essais de combustion ont été réalisés 24 heures après le coulage, près d'une fenêtre ouverte.

Les résultats, intégrant les concentrations en bases molles et en additifs, ainsi qu'une cotation des aspects de la bougie réalisée et des quantités de fumées émises pendant le brûlage, ainsi que la vitesse de combustion, sont exposés dans le Tableau 2.

**Tableau 2 : Aspect, fumées et vitesses de combustion des compositions pour bougies pour verrines.**

| Compositions | IPM 123 (% en poids) | Additif | | Aspect | Fumées | Vitesse de combustion (g/h) |
|---|---|---|---|---|---|---|
| | | Nom commercial | % en poids | | | |
| 1 | 98 | Kraton G (1) | 2 | +++ | +++ | 4,6 |
| 2 | 96 | Kraton G (1 | 4 | +++ | ++ | 3,9 |
| 3 | 99,5 | Elvax 210 (2) | 0,5 | + | - | Arrêté |
| 4 | 96 | Elvax 210 (2) | 4 | + | - | 5,0 |
| 5 | 99 | Polywax 850 (3) | 1 | + | - | Arrêté |
| 6 | 96 | Polywax 850 (3 | 4 | + | - | Arrêté |
| 7 | 98 | Finaprène 503 (4) | 2 | -- | -- | Arrêté |
| 8 | 98 | Finaprène 918 (4) | 2 | -- | -- | 4,6 |
| 9 | 96 | Finaprène 918 (4) | 4 | -- | - | Arrêté |
| 10 | 90 | Cire HMP (5) | 10 | +++ | ++ | 7,6 |
| 11 | 80 | Cire HMP (5) | 20 | +++ | ++ | 6,4 |
| 12 | 96 | AC6 (6) | 4 | ++ | --- | 5,7 |
| 13 | 96 | AC617 (7) | 4 | ++ | --- | 5,9 |
| 14 | 96 | Paraflint H2 (8) | 4 | ++ | --- | 7,6 |

| | | | | | | |
|---|---|---|---|---|---|---|
| (1) Kraton G1650 : terpolymère styrène éthylène / butadiène-styrène commercialisé par la société Shell | | | | | | |
| (2) Elvax 210 : copolymère éthylène-acétate de vinyle (PF=66°C, 28% d'acétate de vinyle) provenant de la société Dupont de Nemours | | | | | | |
| (3) Polywax 850 : cire de polyéthylène (masse moléculaire en poids, Mw, 850, distribution moléculaire étroite 1.08), de la société Bareco | | | | | | |
| (4) Finaprène 503 : terpolymère styrène-butadiène-styrène d'origine AtoFina | | | | | | |
| (5) Cire HMP : cire pétrolière dure et à haut point de fusion (85°C), issue d'un fractionnement à haute température, d'origine Shell | | | | | | |
| (6) AC6 : cire de polyéthylène (PF= 106°C), d'origine Allied Signal | | | | | | |
| (7) AC617 : cire de polyéthylène dure, d'origine Allied Signal | | | | | | |
| (8) Paraflint H2 : cire de synthèse Fischer Tropsch (Pf=98°C) d'origine Sasol. | | | | | | |
| Aspect : Du meilleur +++ (couleur jaune gris clair à blanc), au plus mauvais (---) (couleur jaune huileuse) --- | | | | | | |
| Fumées : De faibles émissions de fumées (+++), à fumées noires abondantes (---) | | | | | | |

On voit, sur le Tableau 2, que seules les bougies pour verrines réalisées à partir des compositions de paraffines conformes à l'invention, intégrant un mélange de bases molles et un additif de type copolymère styrène-éthylène-butylène-styrène (compositions 1 et 2), ou de type cire microcristalline (compositions 10 et 11), permettent d'obtenir les meilleurs résultats en ce qui concerne l'aspect de la bougie de type verrine, sa vitesse de combustion, et les quantités de fumées émises.

Conformément à la présente invention, les bases molles de différents grades, habituellement utilisées comme charges à craquer dans une raffinerie de pétrole, peuvent donc être intégrées avantageusement dans des compositions de paraffines en vue de fabriquer des bougies éclairantes pour verrines.

## Revendications

1. Utilisation pour la réalisation de bougies pour verrines, d'une composition de paraffines comprenant :
- au moins 50 % en poids d'au moins une base molle, constituée essentiellement de molécules hydrocarbonées de type isoparaffinique, dont la teneur en huile est comprise entre 5 % et 35 % en poids, et
- au moins un additif choisi dans le groupe constitué par les copolymères élastomériques de type bloc et/ou le groupe constitué par les cires microcristallines, dont la teneur en poids dans la composition est comprise entre 1 % et 30 % en poids et, de préférence, entre 1 % et 20 % en poids.

2. Utilisation selon la revendication 1, **caractérisée en ce que** la teneur en base molle, seule ou en mélange, est égale à au moins 70 % en poids.

3. Utilisation selon l'une des revendications 1 et 2, **caractérisée en ce que** la teneur en molécules hydrocarbonées de type isoparaffinique de la base molle est comprise entre 50 % et 90 % en poids.

4. Utilisation selon la revendication 3, **caractérisée en ce que** la teneur en molécules hydrocarbonées de type isoparaffinique de la base molle est comprise entre 55 % et 85 % en poids.

5. Utilisation selon l'une des revendications précédentes, **caractérisée en ce que** la teneur en huile de la base molle est comprise entre 5 % et 25 % en poids.

6. Utilisation selon l'une des revendications 1 à 5, **caractérisée en ce que** la composition de paraffines contient des bases molles de grades différents, choisies de manière à adapter la teneur en huile de la base molle entre 5 % et 35 % en poids et, de préférence, entre 5 % et 25% en poids.

7. Utilisation selon l'une des revendications 1 à 6, **caractérisée en ce que** l'additif est un copolymère de la famille des styrène-éthylène-butylène-styrène.

8. Utilisation selon la revendication 7, **caractérisée en ce que** la teneur en copolymère de la composition de paraffines est comprise entre 1 et 20 % en poids et, de préférence, entre 1 et 10 % en poids.

9. Utilisation selon l'une des revendications 1 à 8, **caractérisée en ce que** la teneur en cire microcristalline est comprise entre 1 et 30 % en poids, et de préférence entre 5 et 20 % en poids.

10. Utilisation selon la revendication 9, **caractérisée en ce que** le point de fusion de la cire microcristalline est supérieur à 50°C et, de préférence, supérieur à 80°C.

11. Utilisation selon l'une des revendications 1 à 10, **caractérisée en ce que** la couleur de la composition de paraffines est comprise entre le jaune gris clair et le blanc.

## Patentansprüche

1. Verwendung, zur Herstellung von Kerzen für Glasbehälter, einer Parafinzusammensetzung, die umfaßt:
- mindestens 50 Gewichts-% mindestens einer weichen Basis, die im Wesentlichen aus Kohlenwasserstoffmolekülen vom Isoparaffin-Typ aufgebaut ist, deren Ölgehalt 5 bis 35 Gewichts-% ist, und
- mindestens einen Zusatzstoff, der ausgewählt ist aus der Gruppe, die aus elastomeren Block-Copolymeren aufgebaut ist, und/oder der Gruppe, die aus mikrokristallinen Wachsen aufgebaut ist, wobei der gewichtsmäßige Gehalt des Zusatzstoffs in der Zusammensetzung 1 bis 30 Gewichts-% und vorzugsweise 1 bis 20 Gewichts-% ist.

2. Verwendung gemäß Anspruch 1, **dadurch gekennzeichnet, daß** der Gehalt an weicher Basis, allein oder in Mischung, mindestens 70 Gewichts-% beträgt.

3. Verwendung gemäß einem der Ansprüche 1 und 2, **dadurch gekennzeichnet, daß** der Gehalt an Kohlenwasserstoffmolekülen vom Isoparaffin-Typ der weichen Basis zwischen einschließlich 50 und 90 Gewichts-% liegt.

4. Verwendung gemäß Anspruch 3, **dadurch gekennzeichnet, daß** der Gehalt an Kohlenwasserstoffmolekülen von Isoparaffin-Typ der weichen Basis zwischen einschließlich 55 und 85 Gewichts-% liegt.

5. Verwendung gemäß einem der vorangehenden Ansprüche, **dadurch gekennzeichnet, daß** der Ölgehalt der weichen Basis zwischen einschließlich 5 und 25 Gewichts-% liegt.

6. Verwendung gemäß einem der Ansprüche 1 bis 5, **dadurch gekennzeichnet, daß** die Parafinzusammensetzung weiche Basisstoffe unterschiedlicher Spezifikationen enthält, die so ausgewählt sind, daß der Ölgehalt der weichen Basis zwischen einschließlich 5 und 35 Gewichts-% und vorzugsweise zwischen einschließlich 5 und 25 Gewichts-% liegt.

7. Verwendung gemäß einem der Ansprüche 1 bis 6, **dadurch gekennzeichnet, daß** der Zusatzstoff ein Copolymer aus der Klasse der Styrol/Ethylen/Butylen/Styrole ist.

8. Verwendung gemäß Anspruch 7, **dadurch gekennzeichnet, daß** der Gehalt an Copolymer der Paraffinzusammensetzung zwischen einschließlich 1 und 20 Gewichts-% und vorzugsweise zwischen 1 und 10 Gewichts-% liegt.

9. Verwendung gemäß einem der Ansprüche 1 bis 8, **dadurch gekennzeichnet, daß** der Gehalt an mikrokristallinem Wachs zwischen einschließlich 1 und 30 Gewichts-% und vorzugsweise 5 und 20 Gewichts-% liegt.

10. Verwendung gemäß Anspruch 9, **dadurch gekennzeichnet, daß** der Fließ- bzw. Schmelzpunkt des mikrokristallinen Wachses höher als 50°C und vorzugsweise höher als 80°C ist.

11. Verwendung gemäß einem der Ansprüche 1 bis 10, **dadurch gekennzeichnet, daß** die Farbe der Paraffinzusammensetzung hellgelbgrau bis weiß ist.

## Claims

1. Use, to produce candles for glass jars, of a paraffin composition comprising:
- at least 50 % by weight of at least one soft base, consisting substantially of hydrocarbon molecules of the isoparaffinic type, whose oil content is between 5 % and 35 % by weight, and
- at least one additive selected from the group constituted by elastomeric copolymers of the block type and/or from the group constituted by microcrystalline waxes, whose content by weight in the composition is between 1 % and 30 % by weight, and preferably between 1 % and 20 % by weight.

2. Use according to claim 1, **characterised in that** the content of soft base, alone or in a mixture, is equal to at least 70 % by weight.

3. Use according to either one of claims 1 and 2, **characterised in that** the content of hydrocarbon molecules of the isoparaffinic type in the soft base is between 50 % and 90 % by weight.

4. Use according to claim 3, **characterised in that** the content of hydrocarbon molecules of the isoparaffinic type in the soft base is between 55 % and 85 % by weight.

5. Use according to any one of the preceding claims, **characterised in that** the oil content of the soft base is between 5 % and 25 % by weight.

6. Use according to any one of claims 1 to 5, **characterised in that** the paraffin composition contains soft bases of different grades, selected so as to adjust the oil content of the soft base to between 5 % and 35 % by weight, and preferably to between 5 % and 25 % by weight.

7. Use according to any one of claims 1 to 6, **characterised in that** the additive is a copolymer of the styrene-ethylene-butylene-styrene family.

8. Use according to claim 7, **characterised in that** the copolymer content of the paraffin composition is between 1 and 20 % by weight, and preferably between 1 and 10 % by weight.

9. Use according to any one of claims 1 to 8, **characterised in that** the content of microcrystalline wax is between 1 and 30 % by weight, and preferably between 5 and 20 % by weight.

10. Use according to claim 9, **characterised in that** the melting point of the microcrystalline wax is higher than 50°C, and preferably higher than 80°C.

11. Use according to any one of claims 1 to 10, **characterised in that** the colour of the paraffin composition is between light greyish yellow and white.
